# Europäisches Patentamt

# European Patent Office

# Office européen des brevets

(19)

(11) Veröffentlichungsnummer: **0 004 395**
**B1**

(12) **EUROPÄISCHE PATENTSCHRIFT**

(45) Veröffentlichungstag der Patentschrift:
25.05.83

(21) Anmeldenummer: 79200103.4

(22) Anmeldetag: 02.03.79

(51) Int. Cl.³: **F 23 G  7/06,** F 24 H  3/04,
F 24 H  9/18, F 26 B  23/02 //
F23D11/10

(54) Vorrichtung zur Verbrennung von in einem Gasstrom mitgeführten brennbaren Stoffen.

(30) Priorität: 02.03.78  DE 2808874

(43) Veröffentlichungstag der Anmeldung:
03.10.79 Patentblatt 79/20

(45) Bekanntmachung des Hinweises auf die Patenterteilung:
25.05.83 Patentblatt 83/21

(84) Benannte Vertragsstaaten:
FR GB IT NL

(56) Entgegenhaltungen:
BE-A-502 037
CH-A-417 906
FR-A-2 222 124
FR-A-2 283 392
FR-A-2 284 089
GB-A-866 273
US-A-2 398 654
US-A-2 659 201
US-A-3 232 542
US-A-3 808 987
US-A-3 870 456
US-A-4 044 099
US-A-4 075 358

(73) Patentinhaber: **SMIT OVENS NIJMEGEN B.V.,
Groenestraat 265, Nijmegen (NL)**

(72) Erfinder: **Graat, Johannes W., Meerestraat 1,
Overasselts (NL)**
Erfinder: **Remie, Hans T., c/o Smit Ovens Nijmegen B.V.
Groenestraat 265, Nijmegen (NL)**

(74) Vertreter: **Schulze Horn, Stefan, Dipl.-Ing. et al,
Goldstrasse 36, D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**0 004 395**

Vorrichtung zur Verbrennung von in einem Gasstrom mitgeführten brennbaren Stoffen

Die Erfindung betrifft eine Vorrichtung zur Verbrennung von in einem Gasstrom mitgeführten, brennbaren Stoffen, bestehend aus einem Flammen-Führungsrohr, das von einem der Zuführung des Gasstromes dienenden Mantelrohr umgeben ist, und aus einem an der Stirnseite des Flammen-Führungsrohres angebrachten, mit flüssigem Brennstoff betriebenem Brenner, der einen in der Achse des Flammen-Führungsrohres liegenden Flammkegel erzeugt, sowie mit einem tangential auf das Mantelrohr aufgesetzten Eingangsstutzen und Zuführungsöffnungen, die über Leitvorrichtungen eine Strömung des Gasstromes um den Flammkegel herum erzeugen, sowie mit einem nachgeordneten Stabilisierungsrohr.

Aus der US-A-2 398 654 ist ein Brenner bekannt, bei dem flüssiges oder staubförmiges Brennmaterial beim Eintritt in eine Verbrennungskammer verwirbelt wird. Über Luftleitvorrichtungen wird Primärluft dem Brennstoff-Luft-Gemisch zugeführt, wodurch das Gemisch weiter verdünnt und eine vollständige Verbrennung gewährleistet wird.

Ohne größere Umbauten könnte jedoch ein derartiger Brenner nicht auch als Verbrennungsofen eingesetzt werden. Die Umbauten betreffen insbesondere den Brenner, der das Brennmaterial sehr fein zerstäuben muß. Druckluft und Primärluft und die zu verbrennenden Stoffe müßten ferner so geführt werden, daß eine optimale Nachverbrennung erreicht wird.

Als relevanter Stand der Technik ist weiterhin ein Verbrennungsofen bekannt (US-A-2 753 925), bei dem in einem Gasstrom mitgeführtes Kohlenmonoxid (CO) verbrannt wird. Bei diesem Verbrennungsofen wird aufgrund der einfacheren Handhabung ein Gasbrenner eingesetzt, der, wie dem Fachmann bekannt, nicht ohne weiteres auch mit flüssigen Brennstoffen betrieben werden kann. Durch den Gasbetrieb des Brenners ist der Verbrennungsofen auf eine bestimmte Verbrennungssituation zugeschnitten, die es nicht erlaubt, daß der Verbrennungsofen auch als Heißgaserzeuger eingesetzt werden kann.

Es stellt sich daher die Aufgabe, einen Verbrennungsofen der oben genannten Art so auszugestalten, daß er ohne Umbauten, allein durch Einstellung der Luftzuführung an Brenner und Mantelrohr, auch als Heißgaserzeuger verwendet werden kann. Der Verbrennungsofen soll wirtschaftlich sein und mit verhältnismäßig geringem Aufwand gebaut und betrieben werden können, insbesondere ohne eine keramische Ausmauerung auskommen können.

Diese Aufgabe wird erfindungsgemäß dadurch gelöst, daß bei der Vorrichtung zur Verbrennung von in einem Gasstrom mitgeführten, brennbaren Stoffen der eingangs genannten Art folgende Merkmale gegeben sind:

— der Brenner besitzt eine zweistufige Zerstäubungsanordnung, durch die der flüssige Brennstoff zu feinen Partikeln zerstäbt wird, welche anschließend mit Hilfe von als Zerstäubungsmedium zugeführter Verbrennungsluft im Mittel auf die Hälfte des Durchmessers zerkleinert werden,

— die Durchmesser von Flammenzuführungs- und Stabilisierungsrohr sind im wesentlichen gleich, wobei das Flammen-Führungsrohr eine Länge aufweist, die zwischen dem 1,2—3,3fachen der Länge des Stabilisierungsrohres liegt,

— im Inneren des Stabilisierungsrohres ist wenigstens ein mit einer Leitfläche parallel zu dessen Achse angeordnetes Luftleitelement vorgesehen,

— es sind Mittel vorgesehen, die das Einführen des zu behandelnden Mediums in einer Ebene, die im wesentlichen senkrecht zu der Flammkegelachse steht, in das Flammen-Führungsrohr in einem Bereich des Flammenkegels ermöglichen, wo nach Turbulenz, Verweilzeit und Temperatur des Mediums eine ausreichende Erwärmung bei Heißgasbetrieb oder Verbrennung bei Verbrennungsbetrieb erreicht ist.

Eine wesentliche Voraussetzung für den Betrieb der Vorrichtung gemäß Erfindung ist die sehr feine Zerstäubung des Brennstoffes. Als Anhaltswert kann davon ausgegangen werden, daß bei Verwendung von Heizöl der Stufe EL bei der ersten Zerstäubung durch handelsübliche mechanische Zerstäubungsdüsen der mittlere Partikeldurchmesser etwa 50 μm beträgt und durch die weitere Zerstäubung auf einen mittleren Durchmesser von 5 bis 10 μm verkleinert wird.

Gemäß Erfindung hat es sich für die Verwendung als Heißgaserzeuger günstig herausgestellt, Öffnungen im Mantelrohr des Verbrennungsofens im Bereich der Spitze des Flammkegels so anzuordnen, daß dieser heiße Bereich, der die höchste Wärmeabgabebereitschaft besitzt, besonders stark durch Frischluft durchsetzbar ist.

Die Durchmesser von Luftführungs- und Stabilisierungsrohr sind unter dem Gesichtspunkt eines möglichst geringen apparativen Aufwandes gewählt, wobei ihr Längenverhältnis Turbulenzen im Endbereich des Brenners vermeidet.

Ausführungsbeispiele der erfindungsgemäßen Vorrichtung sind in der beigefügten Zeichnung dargestellt. Die Figuren der Zeichnung zeigen:

Fig. 1 eine Vorrichtung gemäß Erfindung, gestaltet als Heißgaserzeuger, teilweise geschnitten, teilweise perspektivisch;

2

Fig. 2 einen Schnitt durch die Vorrichtung der Fig. 1 in Höhe der Schnittlinie I . . . I;
Fig. 3 einen Schnitt in Höhe der Schnittlinie II . . . II der Fig. 1;
Fig. 4 einen Schnitt in Höhe der Schnittlinie III . . . III der Fig. 1;
Fig. 5 eine Vorrichtung gemäß Erfindung, gestaltet als Verbrennungsofen;
Fig. 6 einen Schnitt für die Luftzuführung in Höhe der Schnittlinie IV . . . IV in Fig. 5.

Die Vorrichtung gemäß Erfindung, gestaltet als Heißgaserzeuger, ist mit einem geraden Flammen-Führungsrohr 1 ausgestattet, welches an seiner Stirnseite 2 teilweise verschlossen ist und zentrisch einen Brenner 3 trägt, der mit einem Brenner-Mantelrohr 4 in das Innere des Flammen-Führungsrohres 1 hineinragt. Der Brenner besitzt an seiner Außenseite ein Luftzuführungsrohr 5 und an seiner Stirnseite Zuführungsrohre 6 für Öl (oder anderen flüssigen Brennstoff) und für Druckluft (Rohr 7). Bei dem dargestellten Brenner handelt es sich um einen Zerstäubungsbrenner, der mit mechanischer Ölzerstäubung und zweifacher, anschließender Zerstäubung mittels Druckluft arbeitet. Dabei werden die Brennstoffteilchen sehr fein zerstäubt. Vorzugsweise wird ein Brenner verwendet, wie er in der US-A-3 870 456 beschrieben ist. Es können jedoch auch andere Brenner verwendet werden, die mit flüssigen Brennstoffen, wie Heizöl EL oder anderen Brennstoffen betrieben werden können.

Durch den Brenner 3 wird eine relativ kurze, stabile Flamme erzeugt, die einen Flammkegel 8 bildet. Die Verbrennungsbedingungen sind entweder stöchiometrisch oder mit Sauerstoffüberschuß. Der Flammkegel ist um die Achse A des Flammen-Führungsrohres angeordnet. Im Bereich der Spitze 9 des Flammkegels 8 sind auf die Innenwand des Flammen-Führungsrohres 1 die Zuführungsöffnungen 11 überdeckende, kurze Leitvorrichtungen 12 aufgesetzt. die Leitvorrichtungen haben etwa einen Durchmesser von 70 mm. Ihre Funktion wird weiter unten erläutert werden. Sie sind als Stutzen ausgebildet.

An das Flammen-Führungsrohr 1 schließt sich in Achsenrichtung ein Stabilisierungsrohr 13 an, das den gleichen Durchmesser hat wie das Flammen-Führungsrohr 1. Das Rohr 13 ist, wie das Rohr 1, im wesentlichen zylindrisch gestaltet. Die eine Grundseite 14' ist offen und dient als Ausgang für die im Heißgaserzeuger erhitzten Gase. Für die Abmessungen des Heißgaserzeugers werden beispielsweise Längen des Luftführungs- und Stabilisierungsrohres von etwa 800 mm gewählt; die lichte Weite dieser Rohre beträgt etwa 300 mm. Diese WErte gelten insbesondere dann, wenn die durchgesetzte Luftmenge etwa 5000 m³/h bei einer Erwärmung von 20° auf 200°C beträgt.

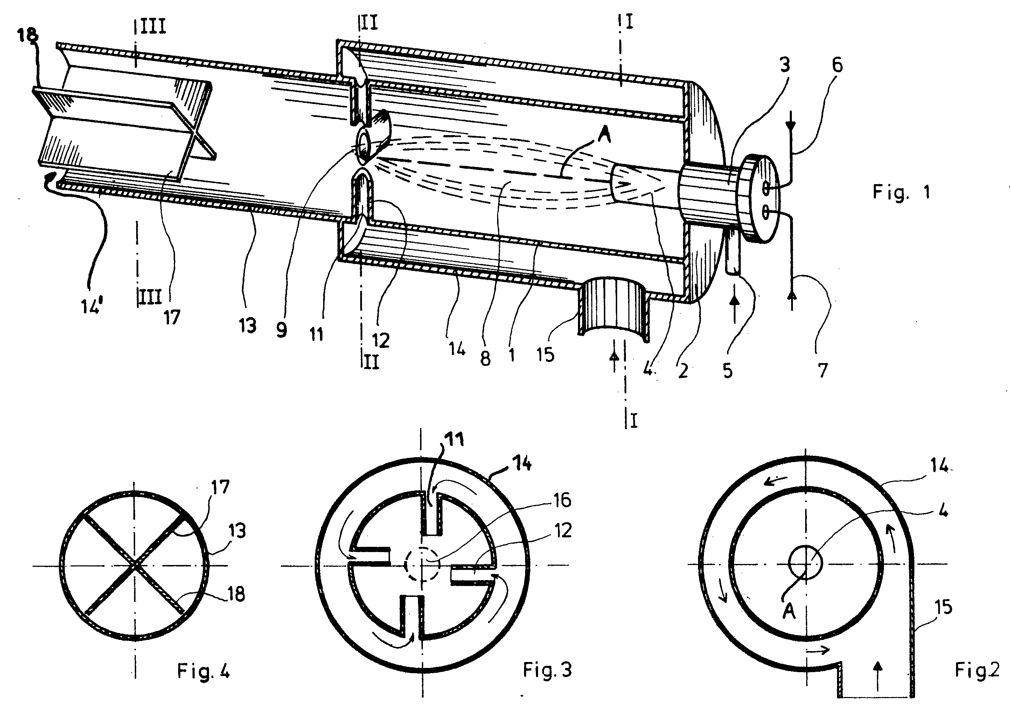

Der weitere Aufbau wird anhand der Schnittbilder der Fig. 2 bis 4 erläutert.

Fig. 2, die einen Schnitt in Höhe des Brenner-Mantelrohres 4 zeigt, macht deutlich, daß um das Flammen-Führungsrohr 1 noch ein koaxial angeordnetes, hohles Mantelrohr 14 angeordnet ist. Dieses besitzt wenigstens einen Eingangsstutzen 15 im Bereich der Brennermündung, der mit der kalten, zu erwärmenden Luft beschickt wird. Das Mantelrohr 14 umgibt im wesentlichen das gesamte Flammen-Führungsrohr 1 und ermöglicht die Luftzuführung bis zu den bereits erwähnten Leitvorrichtungen 12. Über die Zuführungsöffnungen 11, die innerhalb des Mantelrohres 14 enden, strömt die Luft dann durch die Leitvorrichtungen 12 ein, wie insbesondere auch aus der Fig. 3 ersichtlich ist. Die Leitvorrichtungen dienen als Luftleitvorrichtungen für die Kaltluft, die die aus den Öffnungen strömende Luft an die Peripherie eines um die Achse A angeordneten, einen Durchmesser $D_i$

$$\frac{D_s}{1,2} \geqslant D_i \geqslant \frac{D_s}{5}$$

($D_s$ = Durchmesser des Flammen-Führungsrohres) besitzenden Kreises 16 leiten. Im vorliegenden Falle hat der Kreis etwa einen Durchmesser von 70 mm, während das Flammen-Führungsrohr einen Durchmesser von etwa 300 mm besitzt.

Der Eingangsstutzen 15 ist tangential auf die Mantelaußenwand aufgesetzt, so daß eine Tangentialströmung innerhalb des Mantelrohres 14 entsteht, die Wendeln hervorruft, die von der einströmenden Kaltluft gebildet werden. Die Vorteile dieser Ausführungsform sind bereits erläutert worden.

Die Fig. 4, welche einen Schnitt durch das Stabilisierungsrohr 13 zeigt, macht deutlich, daß im Inneren des Stabilisierungsrohres 13 zwei kreuzweise angeordnete Leitflächen 17, 18 vorhanden sind, welche etwa die Hälfte der Länge des Stabilisierungsrohres 13 einnehmen. Die Leitflächen teilen die zunächst im Anfang des Stabilisierungsrohres hochturbulenten Heizgase in vier Abschnitte auf, die in sich anfangs noch turbulent sind und anschließend in eine laminare Strömung gezwungen werden. Daher sind die Leitflächen der Elemente 17, 18 im wesentlichen parallel zu der Achse A angeordnet.

Versuche mit dem genannten Heißgaserzeuger haben gezeigt, daß ein Heißgas mit sehr hoher Temperaturkonstanz erzeugt werden kann. Ohne weiteres sind bei Verwendung des genannten Brenners bei einer Temperatur von ca. 1000°C nur ±5°C Abweichungen gemessen worden. Hinzu kommt, daß der Erzeuger nicht nur bei einer bestimmten, konstanten Temperatur gefahren werden kann, sondern daß durch Regelung der Brennstoff- und Luftzufuhr die Temperatur zwischen 50°C bis 1 300°C variiert werden kann.

Üblicherweise ist nur ein einziger Kranz von Leitvorrichtungen 12 vorgesehen. Es wird jedoch nicht ausgeschlossen, daß im Bereich des Flammen-Führungs- bzw. Stabilisierungsrohres in weiteren Ebenen noch weitere Öffnungen für zuzuführende Medien vorgesehen sein können, ohne daß der Rahmen der Erfindung verlassen wird.

Der Heißgaserzeuger kann nicht nur mit Kaltluft beschickt werden, sondern ist auch dazu zu verwenden, über die Leitvorrichtungen 12 oder ähnlich gestaltete Öffnungen flüssige Substanzen, Schlämme und dergleichen zu erwärmen bzw. im Direktverfahren zu trocknen.

Darauf hinzuweisen ist, daß unter dem Medium, das mit »Kaltluft« bezeichnet ist, selbstverständlich neben Luft auch andere Gase, beispielsweise inertisierte Verbrennungsgase, verstanden werden können.

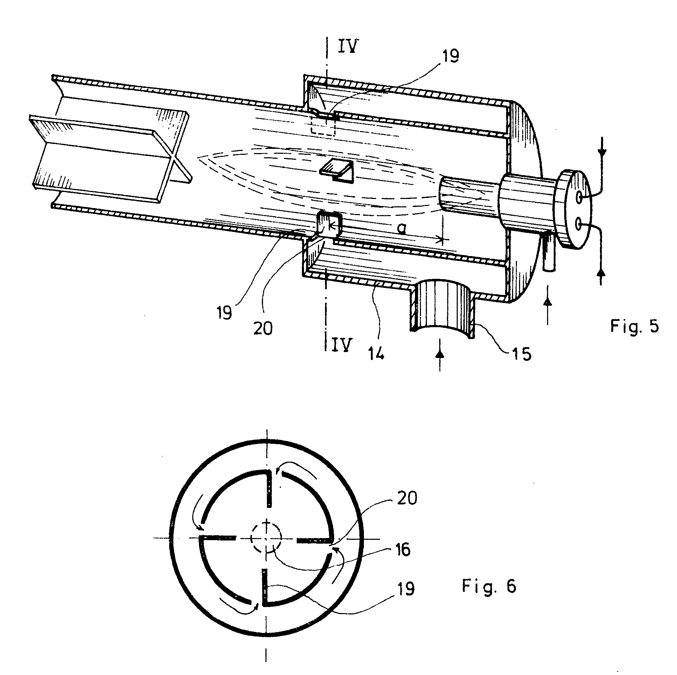

Fig. 5 zeigt die Vorrichtung gemäß Erfindung gestaltet als Verbrennungsofen (Incinerator). Durch den Eingangsstutzen 15 wird ein Gemisch aus Luft mit Anteilen oxidierbarer Stoffe, wie Lösungsmitteln, Zersetzungs- oder Röstprodukten oder bei Raffinerie-Prozessen anfallenden, schwefelhaltigen Produkten eingeführt. Über das Mantelrohr 14 gelangt das Medium durch Zuführungsöffnungen 20, die mit Leitvorrichtungen 19 versehen sind, in den mittleren Bereich des Flammkegels 8. Dort erfolgt eine Vermischung mit den heißen Flammgasen und Verbrennung der oxidierbaren Substanzen. Dabei ist der Einführungsort so zu wählen, daß Turbulenz, Verweilzeit und Temperatur der zugefügten Komponente(n) in der Flamme die vollständige Verbrennung ermöglichen. Die folgende Tabelle gibt hierfür Beispielswerte:

| Substanz, Einleit-T. | Einführungsabstand[+] | Temperatur der Flamme nach Zumischung |
|---|---|---|
| Luft mit bis zu 1% Aceton, 20°C | 0,3 ... 0,6 | 800 ... 1200°C |
| Abluft einer Kaffeerösttrommel, 40°C | 0,2 ... 0,4 | 1000 ... 1400°C |
| Abluft aus Fischmehlproduktion, 25°C | 0,5 ... 0,7 | 700 ... 1000°C |

[+]) gemessen im Abstand a vom Rand des Brenner-Mantelrohres 4, bezogen auf die Gesamtlänge der Flamme = 1; vgl. Figur 5.

Die erforderliche Verweilzeit ist bei den angegebenen Substanzen sehr unterschiedlich, bedingt durch die Teilchen- und Molekülgröße und durch den geforderten Verbrennungsgrad. Sie liegt etwa zwischen 10 msec und 2 sec. Gemäß der Erfindung kann die Vorrichtung so ausgelegt werden, daß sich die geforderten Verweilzeiten einstellen lassen.

Fig. 6 zeigt einen Schnitt IV ... IV. Anstelle der als Stutzen ausgebildeten Leitvorrichtungen 12 gemäß Fig. 1 sind bei den Leitvorrichtungen 19 kurze Bleche vorgesehen, welche die durch die Zuführungsöffnungen 20 einströmende Kaltluft an die Peripherie eines gedachten Kreises 16 leiten, wie bereits bei der Beschreibung der Leitvorrichtungen 12 erläutert. Es ist möglich, die Form der Öffnungen auch bei Heißgaserzeugern zu verwenden, wie es auch möglich ist, die beschriebenen Leitvorrichtungen bei der Ausführung als Verbrennungsofen einzusetzen.

Durch Anordnung von Zuführungsöffnungen in mehreren Ebenen in bezug auf die Flamme ist es möglich, die Vorrichtung bei entsprechenden zusätzlichen Abschlußvorrichtungen innerhalb des Mantelrohres 14 sowohl als Heißgaserzeuger als auch als Verbrennungsofen zu verwenden.

**Patentanspruch**

Vorrichtung zur Verbrennung von in einem Gasstrom mitgeführten, brennbaren Stoffen, bestehend aus einem Flammen-Führungsrohr (1), das von einem der Zuführung des Gasstromes dienenden Mantelrohr (14) umgeben ist, und aus einem an der Stirnseite des Flammen-Führungsrohres angebrachten, mit flüssigem Brennstoff betriebenen Brenner (3), der einen in der Achse des Flammen-Führungsrohres (1) liegenden Flammkegel (8) erzeugt, sowie mit einem tangential auf das Mantelrohr aufgesetzten Eingangsstutzen (15), und Zuführungsöffnungen (11, 20), die über Leitvorrichtungen (12, 19) eine Strömung des Gasstromes um den Flammkegel (8) herum erzeugen sowie mit einem nachgeordneten Stabilisierungsrohr (13), dadurch gekennzeichnet, daß

— der Brenner (3) eine zweistufige Zerstäubungsanordnung besitzt, durch die der flüssige Brennstoff zu feinen Partikeln zerstäubt wird, welche anschließend mit Hilfe von als Zerstäubungsmedium zugeführter Verbrennungsluft im Mittel auf die Hälfte des Durchmessers zerkleinert werden,

— daß die Durchmesser von Flammenzuführungs- und Stabilisierungsrohr im wesentlichen gleich sind, wobei das Flammen-Führungsrohr eine Länge aufweist, die zwischen dem 1,2—3,3fachen der Länge des Stabilisierungsrohres (13) liegt,

— daß im Inneren des Stabilisierungsrohres (13) wenigstens ein mit seiner Leitfläche parallel zu dessen Achse angeordnetes Luftleitelement (17, 18) vorgesehen ist,

— und daß Mittel vorgesehen sind, die das Einführen des zu behandelnden Mediums in einer Ebene, die im wesentlichen senkrecht zu der Flammkegelachse steht, in das Flammführungsrohr (1) in einem Bereich des Flammkegels (8) ermöglichen, wo nach Turbulenz, Verweilzeit und Temperatur des Mediums eine ausreichende Erwärmung bei Heißgasbetrieb oder Verbrennung bei Verbrennungsbetrieb erreicht ist.

**Claim**

Apparatus for the combustion of combustible substances entrained in a gas stream, said apparatus comprising a flame conducting pipe (1), said conducting pipe being surrounded by a jacket (14) for the supply of the gas stream, said apparatus further comprising a burner (3) for liquid fuel positioned at the front side of the flame conducting pipe, said burner producing a flame cone (8) disposed on the axis of the flame conducting pipe (1), said apparatus further comprising an inlet nozzle (15) mounted tangentially to the jacket, and inlet ports (11, 20), said ports forming a stream of the gas stream around said flame cone (8), using air directing means, and comprising a stabilizing pipe (13) disposed downstream, characterized in that

— the burner (3) includes a two-stage atomizing assembly atomizing the liquid fuel into minute particles, said particles being further atomized to about the half of the former diameter by the combustion air supplied as atomizing medium,

— the diameters of the flame conducting pipe and the stabilizing pipe are substantially equal, and that the lenght of the flame conducting pipe is related to the lenght of the stabilizing pipe in the relation 1.2—3.3,

— that within the stabilizing pipe (13) at least one air directing means (17, 18) is provided, said air directing means being positioned so that its conducting face is parallel to the axis of the stabilizing pipe,

— and that means are provided for, which enable introducing the medium to be treated into the flame conducting pipe (1), in a plane essentially perpendicular to the axis of the flame cone and within a range of the flame cone (8) which, according to turbulence, residence time and temperature of said medium, provides for sufficient heat when working in a hot gas stream mode or for combustion when working in a combustion mode.

**Revendication**

1. Dispositif pour réaliser la combustion de substances combustibles entraînées dans un courant gazeux, constitué par un tube (1) de guidage des flammes, qui est entouré par une enveloppe tubulaire (14) servant à amener le courant gazeux, et par un brûleur (3) monté sur la face frontale du tube de guidage des flammes et fonctionnant avec un combustible liquide et qui produit un cône de flammes (8) situé sur l'axe du tube (1) de guidage des flammes, ainsi que par une tubulure d'entrée (15) montée tangentiellement sur l'enveloppe tubulaire, et des ouvertures d'amenée (11, 20) qui produisent par l'intermédiaire de dispositifs de guidage (12, 19), un écoulement du courant gazeux autour du cône de flammes (8), ainsi que par qu'un tube de stabilisation (13) monté en aval, caractérisé en ce que

— le brûleur (3) possède un dispositif de pulvérisation à deux étages, au moyen duquel le combustible liquide est pulvérisé en fines particules qui sont ensuite subdivisées en moyenne à la moitié de leur diamètre à l'aide d'un air de combustion envoyé en tant que milieu de pulvérisation,

— que les diamètres du tube de guidage des flammes et du tube de stabilisation sont essentiellement identiques, le tube de guidage des flammes possédant une longueur qui est comprise entre 1,2 et 3,3 fois la longueur du tube de stabilisation (13),

— qu'à l'intérieur du tube de stabilisation (13) se trouve prévu au moins un élément de guidage de l'air (17, 18) dont la surface de guidage est disposée parallèlement à l'axe du tube,

— et qu'il est prévu des moyens qui permettent l'introduction du milieu devant être traité dans un plan qui est essentiellement perpendiculaire à l'axe du cône de flammes, dans le tube (1) de guidage des flammes dans une zone du cône de flammes (8) où selon la turbulence, le temps de séjour et la température du milieu, on obtient un échauffement suffisant dans le cas du fonctionnement en générateur de gaz chauds, ou une combustion suffisante dans le cas du fonctionnement avec combustion.

Fig. 1

Fig. 4

Fig. 3

Fig 2

0 004 395

IV

19

19

20

IV

14

15

a

Fig. 5

20

16

19

Fig. 6